# EUROPEAN PATENT SPECIFICATION

(11) **EP 3 060 819 B1**
(45) Date of publication and mention of the grant of the patent: **28.02.2018**
(21) Application number: 14802166.0
(22) Date of filing: 16.10.2014
(51) Int. Cl.: F16C 33/20, E01D 19/04

(54) **SLIDING BEARING FOR STRUCTURAL ENGINEERING APPLICATIONS**
GLEITLAGER FÜR STRUKTURELLE TECHNISCHE ANWENDUNGEN
PALIER COULISSANT POUR APPLICATIONS D'INGÉNIERIE STRUCTURELLE

(30) Priority: 23.10.2013 IT MI20131767
(43) Date of publication of application: 31.08.2016
(73) Proprietor: Fortune Construction Engineering Ltd., Hong Kong (CN)
(72) Inventor: ABET, Francesco, I-20125 Milano (MI) (IT)
(74) Representative: Spina, Alessandro
(86) International application number: PCT/IB2014/065373
(87) International publication number: WO 2015/059610

(56) References cited:
- EP-A1- 2 179 189
- US-A1- 2003 022 797

## Description

The present invention relates to a bearing device for structural engineering applications and in particular to a sliding bearing for civil structures such as bridges and buildings.

Civil engineering structures generally employ bearings that serve to restrain two or more parts of a structure. Bearing may form restraints such as slides, hinges, combinations thereof, and allow relative movements between or among the parts of the structure, typically sliding movements or rotations either during normal operation or in case of seismic events.

Sliding bearings generally comprise at least one pair of flat or curved sliding surfaces that can slide and/or rotate relative to each other. One of the sliding surfaces is typically made of metal and is mirror-polished, while the other sliding surface is made of a polymeric material having a low coefficient of friction. In order to further reduce the coefficient of friction between the two sliding surfaces a lubricant is generally used.

The metal surfaces are e.g. made of stainless austenitic or ferritic steel, or of an aluminum alloy, while the most used low friction polymeric material is polytetrafluoroethylene (PTFE).

In order to meet the conditions laid down by the standards in the field, a sliding bearing must have a low static and dynamic coefficients of friction, a high wear resistance and an adequate resistance to the compressive loads resulting from the weight of a structure the bearing is intended to support, as well as to other loads deriving from the operating conditions. These features require a suitable combination of the properties of the materials forming the sliding surfaces, as well as of the properties of any lubricant used therebetween.

Although the use of PTFE in the field of civil engineering is now widely established, it is known that it has a limited resistance to compression and wear, as well as a reduction of its mechanical properties when temperature increases.

Among the materials alternative to PTFE for the manufacturing of polymeric sliding surfaces in sliding bearings, ultra-high molecular weight polyethylene (UHMWPE) has been suggested. This material in fact features a higher resistance to wear and compression than PTFE. However, like PTFE also UHMWPE features a rapid decrease in mechanical strength when temperature increases.

Another material that has been recently proposed for the manufacturing of polymeric sliding surfaces in sliding bearings is cast polyamide 6 added with solid state lubricants, which allows to obtain sliding surfaces that maintain their properties at temperatures higher than 48°C, which is the operating limit presently established by the European standard EN 1337-2 for sliding bearings employing sliding surfaces made of a low friction polymeric material. An example of such application is disclosed in European patent 2179189.

US 2003/022797 discloses a composition having a low degree of friction and wear and capable of supplying a lubricant continuously to a sliding surface. The composition may be used in bearings, such as e.g. seismically isolated apparatuses, and is obtained by adding a porous silica and a lubricant to a base material, adding the lubricant-impregnated porous silica to the base material or adding the lubricant-impregnated porous silica and the lubricant to the base material. US 2003/022797 discloses a large number of materials as possible choices for the base material, among which polyamide 6. This document also discloses several types of porous silica and lubricants or lubricating oils.

However, US 2003/022797 does not disclose any preferred combination of the materials forming the composition for the manufacturing of the sliding surfaces, i.e. plates and/or strips, of a bearing.

Despite the wide availability of polymeric materials for the manufacturing of polymeric sliding surfaces for sliding bearings, there is currently strongly felt the need to find polymeric materials that may provide higher mechanical performances, in particular concerning the resistance to compression and wear, which is an object of the present invention.

Said object is achieved with a sliding bearing whose main features are disclosed in claim 1, while other features are disclosed in the remaining claims.

An idea of solution underlying the invention is to employ polyamide as low friction polymeric material for the manufacturing of the sliding surfaces of a sliding bearing. This material in fact features mechanical properties that meet the requirements of the European standard EN 1337-2 concerning friction coefficient, wear resistance, maximum permissible sliding velocity and maximum permissible sliding path.

It is also an idea of solution underlying the invention to use a cast polyamide 6 comprising added liquid state lubricants.

This particular choice of the polymeric material allows to manufacture sliding surfaces for a sliding bearing having coefficients of friction that are comparable to those of PTFE, but feature values of wear resistance and compressive that are much higher on equal shape and size.

Compared to the provision of solid state lubricants as described in the European patent 2179189, the use of lubricants in the liquid state in a cast polyamide 6 allows to make sliding surfaces that are much more flexible on equal shape and size, which is particularly advantageous when such members, that are typically flat, must be accommodated in curved seats, for example spherical seats.

Moreover, while solid state lubricants are poorly effective at temperatures below 60°C, liquid lubricants ensure good performances over much broader temperature ranges and even at temperatures below freezing.

According to the invention, the polyamide used for the realization of the sliding surfaces may be advantageously crosslinked, e.g. chemically or by irradiation, thus allowing to increase its maximum operating temperature, mechanical strength and modulus of elasticity compared to the a polyamide that is not crosslinked. Crosslinking of the material also allows to obtain a higher surface hardness and to increase wear resistance and dimensional stability in view of high operating temperatures.

Further advantages and features of the sliding bearing according to the present invention will be clear from the following description of embodiments thereof with reference to the following figures, in which:
- Figure 1 is a front view schematically showing a sliding bearing according to the invention; and
- Figure 2 is a partial cross-sectional view of the sliding bearing of Figure 1, taken on a plane passing through line II-II of Figure 1.

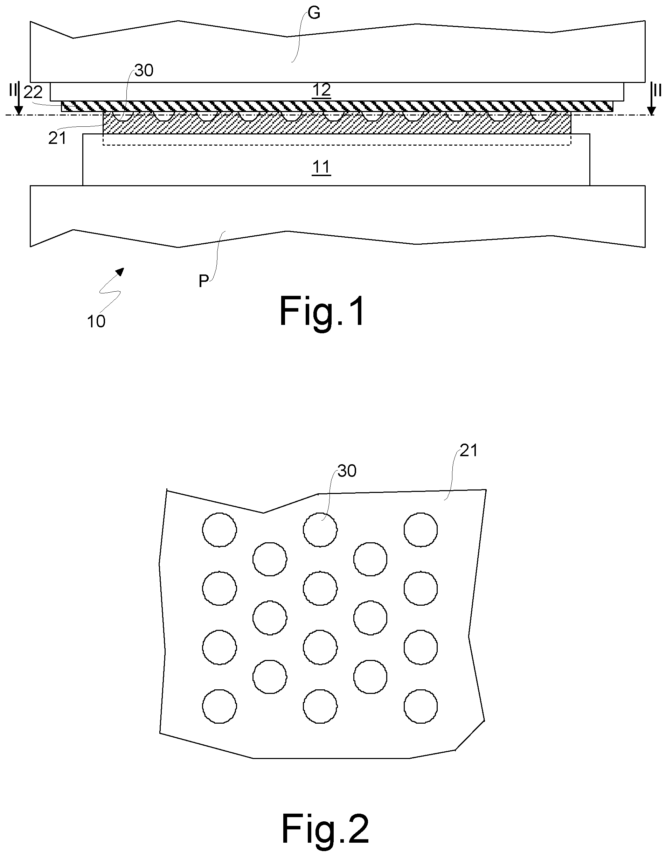

With reference to Figure 1, a sliding bearing according to the invention is generally indicated by reference number 10. The sliding bearing 10 comprises a first member 11 adapted to be connected to a supporting structure, for example a bridge pile P, and a second member 12 adapted to be connected e.g. to a girder G of the bridge superstructure.

Between the first member 11 and second member 12 at least one pair of sliding surfaces 21, 22 is arranged, the sliding surfaces being configured to allow movements and/or rotations between the first and second members 11, 12 of the bearing 10.

In the illustrated embodiment, the sliding bearing 10 is for example of flat multidirectional type, i.e. provided with flat sliding surfaces that allow relative movements between the first and the second members 11, 12 along any direction parallel to their contact plane and/or relative rotations about axes perpendicular to the contact plane.

This configuration of the sliding bearing is not binding in the invention, which may also be applied to e.g. unidirectional and bidirectional flat type sliding bearings that employ sliding surfaces of the type described above, as well as additional sliding surfaces associated to guide rails. The invention may also be applied to spherical type sliding bearings.

Still with reference to the illustrated embodiment, one of the sliding surfaces, for example the one indicated by reference numeral 21, is a plate made of a low friction polymeric material, while the other sliding surface is a plate 22 made of a metal material, for example austenitic or ferritic stainless steel or an aluminum alloy. In order to minimize the coefficient of friction, the metal material plate 22 is typically mirror-polished.

The plates 21, 22 are respectively restrained to the first and second members 11, 12 of the bearing 10. Plate 21 is e.g. fitted in a seat formed in the first member 11, while plate 22 is e.g. restrained by screws to the second member 12.

For the purposes of the present invention it is completely irrelevant that the plates 21, 22 are restrained to the first or the second member 11, 12. The means used for mounting the plates on the respective members are also not binding in the invention.

According to the present invention, the low friction polymeric material forming the polymeric sliding surface, namely plate 21, is a cast polyamide 6 comprising added lubricants which are in the liquid state at temperatures of about 20°C and pressures of about 1000 hPa, i.e. at ambient conditions in regions having temperate climate. Such a polyamide can be obtained through a process of activated anionic polymerization of lactams.

The main properties of this material when having a moisture content of about 3.5% are shown in Table 1 below.

**Table 1**

| **Property** | **Value** | **Unit** | **Method** |
|---|---|---|---|
| Specific gravity | 1,14 | g/cm³ | EN ISO 1183-1 |
| Melt temperature | 215 | °C | ISO 11357 |
| Yield stress | >60 | MPa | EN ISO 527 |
| Elongation at break | >90 | % | EN ISO 527 |
| Elastic module | >750 | MPa | EN ISO 527 |
| HB₃₀ Hardness | >40 | N/mm² | EN ISO 2039-1 |
| Shore Hardness | >65 | D Scale | DIN 53505 |

The lubricants in the liquid state are incorporated into polyamide 6 during its manufacturing process and are preferably selected from the group consisting of mineral oils, vegetable oils, aromatic hydrocarbons, aliphatic and iso-hydrocarbons, liquid waxes, ester based synthetic oils, fluorinated ethers, fluorinated waxes, silicones, polysiloxanes, polyglycols and chlorinated biphenyls.

Experimental tests have shown that these lubricants in the liquid state allow to manufacture members of cast polyamide 6, for example plates, for making sliding surfaces for bearings for structural engineering that can operate on much broader temperature ranges than the temperatures ranges that may be achieved by employing solid state lubricants. The operation temperatures that may be achieved by using liquid state lubricants range in particular between -50°C and + 120°C.

Experimental tests have also shown that members made of cast polyamide 6 added with one of the liquid state lubricants mentioned above have a much higher wear resistance than members of equal size and shape made of PTFE, and in particular sliding paths of more than 50000 m, said sliding paths having been verified by way of samples tested in accordance with the European standard EN 1777-2.

Moreover, further experimental tests carried out on standard samples have shown that the compression resistance offered by the material of the invention is higher than or equal to 210 MPa, i.e. much higher than the compression resistance of PTFE and UHMWPE.

The cast polyamide 6 comprising added liquid state lubricants may advantageously be crosslinked, thus allowing to increase its mechanical properties. Crosslinking may be carried out according to any known techniques i.e. chemically or by irradiation with gamma rays or accelerated electrons at high doses of radiation, preferably between 25 kGy and 500 kGy. In order to facilitate the crosslinking process by way of irradiation, the material may be added with chemical crosslinking agents and radical initiators. The irradiation treatment is preferably followed by a thermal stabilization treatment suitable to remove reactive free radicals.

In particular, crosslinking carried out by irradiation allows to increase the molecular weight of polyamide 6 through the formation of intermolecular bonds, that can modify the chemical, physical and mechanical properties of the polymer. Crosslinking allows to increase the maximum operating temperature, which can achieve 170°C, as well as mechanical strength, modulus of elasticity, surface hardness and resistance to wear. The crosslinking process also improves the dimensional stability of the material at high temperatures.

When carrying out crosslinking by irradiation it is advantageous to add stabilizers and/or antioxidants to the polymer during the compounding phase and before the irradiation treatment, so as to eliminate the free radicals produced by the irradiation treatment by way of beta or gamma rays.

The low friction characteristics of a sliding bearing incorporating plates made of the polyamide described above may further be improved by forming a plurality of recesses or dimples suitable to receive and retain a lubricant.

With reference to Figure 2, the dimples formed in the sliding surface 21 are indicated by reference number 30 and e.g. have a circular shape. The dimples 30 may be arranged according to patterns with prescribed distances between the rows and columns, for example chosen so that each dimple is equidistant from the dimples adjacent thereto.

## Claims

1. A sliding bearing (10) for structural engineering applications, said sliding bearing comprising a first member (11) configured to be connected to a supporting structure (P), a second member (12) configured to be connected to an element (G) to be placed on said supporting structure (P), the sliding bearing (10) further comprising at least one pair of sliding surfaces (21, 22) operably connected to said first and second members (11, 12) and configured so as to allow the first and second members to be moved and/or rotated relative to each other, wherein one (22) of the sliding surfaces is made of a metal material and the other one (21) of the sliding surfaces is made of a low-friction polymer material, **characterized in that** said low-friction polymer material is a cast polyamide 6 comprising added lubricants that are in the liquid state at temperatures in the order of 20°C and pressures in the order of 1000 hPa.

2. A sliding bearing according to claim 1, wherein said liquid-state lubricants are chosen in the group consisting of mineral oils, vegetable oils, aromatic hydrocarbons, aliphatic hydrocarbons and iso-hydrocarbons, liquid waxes, organic esters based synthetic oils, fluorinated ethers, fluorinated waxes, silicones, polysiloxanes, polyglycols and chlorinated biphenyls.

3. A sliding bearing according to claim 1 or 2, wherein said cast polyamide 6 added with liquid-state lubricants is crosslinked.

## Patentansprüche

1. Ein Gleitlager (10) für Anwendungen im konstruktiven Ingenieurbau, wobei das Gleitlager ein erstes Element (11) aufweist, das dazu ausgelegt ist, um mit einer Tragstruktur (P) verbunden zu werden, sowie ein zweites Element (12), das dazu ausgelegt ist, um mit einem Element (G) verbunden zu werden, welches auf der Tragstruktur (P) platziert werden soll, wobei das Gleitlager (10) ferner wenigstens ein Paar von mit dem ersten und zweiten Element (11, 12) verbundenen, gleitenden Oberflächen (21, 22) aufweist, welche derart ausgelegt sind, um dem ersten und dem zweiten Element eine Bewegung und/oder eine Rotation relativ zueinander zu ermöglichen, wobei eine (22) der gleitenden Oberflächen aus einem metallischen Werkstoff besteht und die andere (21) der gleitenden Oberflächen aus einem reibungsarmen Polymerwerkstoff hergestellt ist, **dadurch gekennzeichnet, dass** der besagte, reibungsarme Polymerwerkstoff ein gegossenes Polyamid 6 ist, welches Schmierstoffe als Zusatz aufweist, die sich bei Temperaturen in der Größenordnung von 20 °C und bei Drücken in der Größenordnung von 1000 hPa im flüssigen Zustand befinden.

2. Ein Gleitlager nach Anspruch 1, wobei die besagten Schmierstoffe im flüssigen Zustand ausgewählt sind aus der Gruppe bestehend aus Mineralölen, pflanzlichen Ölen, aromatischen Kohlenwasserstoffen, aliphatischen Kohlenwasserstoffen und iso-Kohlenwasserstoffen, flüssigen Wachsen, synthetischen Ölen auf Basis von organischen Estern, fluorierten Ethern, fluorierten Wachsen, Silikonen, Polysiloxanen, Polyglykolen und chlorierten Biphenylen.

3. Ein Gleitlager nach Anspruch 1 oder 2, wobei das gegossene Polyamid 6, das flüssige Schmierstoffe als Zusatz enthält, vernetzt ist.

## Revendications

1. Palier coulissant (10) pour des applications d'ingénierie structurelle, ledit palier coulissant comprenant un premier élément (11) configuré de manière à être connecté à une structure de support (P), un deuxième élément (12) configuré de manière à être connecté à un élément (G) destiné à être placé sur ladite structure de support (P), le palier coulissant (10) comprenant en outre au moins une paire de surfaces de coulissement (21, 22) connectées de manière fonctionnelle auxdits premier et deuxième éléments (11, 12) et configurées de manière à permettre aux premier et deuxième éléments d'être déplacés et/ou tournés l'un par rapport à l'autre, dans lequel l'une (22) des surfaces de coulissement est faite en un matériau métallique et l'autre (21) des surfaces de coulissement est faite en un matériau polymère à faible coefficient de frottement, **caractérisé en ce que** ledit matériau polymère à faible coefficient de frottement est un polyamide 6 coulé comprenant des lubrifiants ajoutés qui sont à l'état liquide à des températures de l'ordre de 20 °C et sous des pressions de l'ordre de 1 000 hPa.

2. Palier coulissant selon la revendication 1, dans lequel lesdits lubrifiants à l'état liquide sont choisis dans le groupe constitué par les huiles minérales, les huiles végétales, les hydrocarbures aromatiques, les hydrocarbures et iso-hydrocarbures aliphatiques, les cires liquides, les huiles synthétiques à base d'esters organiques, les éthers fluorés, les cires fluorées, les silicones, les polysiloxanes, les polyglycols et les biphényles chlorés.

3. Palier coulissant selon la revendication 1 ou 2, dans lequel ledit polyamide 6 coulé additionné de lubrifiants à l'état liquide est réticulé.
